# EUROPEAN PATENT SPECIFICATION

(11) **EP 1 653 106 B1**
(45) Date of publication and mention of the grant of the patent: **14.11.2018**
(21) Application number: 05112658.9
(22) Date of filing: 22.03.2002
(51) Int. Cl.: F16D 25/08, F16H 63/18

(54) **A double-clutch transmission for a motor-vehicle**
Doppelkupplungsgetriebe für Kraftfahrzeug
Transmission à double embrayage pour véhicule

(30) Priority: 27.03.2001 IT TO20010284
(43) Date of publication of application: 03.05.2006
(62) Divisional of application: 02006449.9
(73) Proprietor: C.R.F. Società Consortile per Azioni, 10043 Orbassano (TO) (IT)
(72) Inventor: Baldascini, Filippo, I-10043, Orbassano (Torino) (IT); Caenazzo, Dario, I-10043, Orbassano (TORINO) (IT); Garabello, Marco, I-10043, Orbassano (Torino) (IT); Mesiti, Domenico, I-10043, Orbassano (Torino) (IT); Pesola, Fabio, I-10043, Orbassano (Torino) (IT); Pregnolato, Gianluigi, I-10043, Orbassano (Torino) (IT); Uberti, Maurizio, I-10043, Orbassano (Torino) (IT)
(74) Representative: Rondano, Davide

(56) References cited:
- DE-A1- 3 037 990
- DE-A1- 3 907 030
- US-A- 4 518 070
- PATENT ABSTRACTS OF JAPAN vol. 009, no. 063 (M-365), 20 March 1985 (1985-03-20) & JP 59 197625 A (SUZUKI JIDOSHA KOGYO KK), 9 November 1984 (1984-11-09)

## Description

The present invention relates to a double-clutch transmission for a motor-vehicle. according to the preamble of Claim 1.

A transmission of the above-specified type is known from the generic DE 30 37 990. According to this document, one of the two clutches of the clutch unit is operated by a rod which is accommodated slidably within the inner input shaft of the gearbox. A sliding sleeve is mounted on an end portion of the rod and has an annular groove in which a clutch actuation member engages. The clutch actuation member is slidably arranged in a guide way provided in a gear shifting gate driven by a servo motor.

Moreover, DE 39 07 030 A1 discloses a motor-vehicle transmission comprising a gearbox with a single input shaft and with a single friction clutch for coupling the input shaft with the crankshaft. The friction clutch is operated by a tubular rod which is slidably accommodated in a coaxial cavity of the input shaft and is in turn operated by an annular piston. The annular piston is slidably disposed in a cylindrical portion of a vertical wall of the gear case axially opposite to the friction clutch.

The object of the present invention is to provide a double-clutch transmission for a motor-vehicle having a simple structure and small axial dimensions.

This object is achieved in full according to the present invention by a double-clutch transmission for a motor-vehicle as defined in the characterizing part of Claim 1.

Further advantageous characteristics of the invention are set forth in the dependent claims.

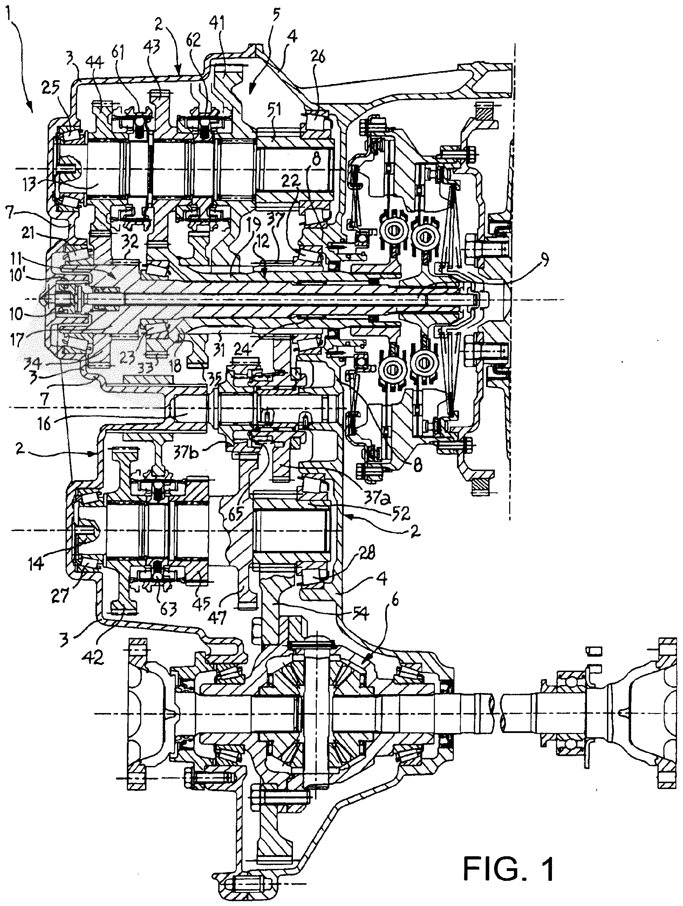

These and other characteristics, as well as further objects and advantages of the invention, will become clearer from the following detailed description, given purely by way of non-limiting example with reference to the appended drawing, in which Figure 1 is a longitudinal section view through a double-clutch transmission for a motor-vehicle according to a preferred embodiment of the invention.

With reference to Figure 1, a double-clutch transmission for a motor-vehicle is generally indicated 1 and comprises a gearbox 5 and a differential 6 housed in a support housing 2 constituted by two half-shells 3 and 4 clamped to one another.

The gearbox 5, which is of the type with independent gears, that is, gears that are not shared, comprises:
- two coaxial input shafts 11 and 12, that is, an inner input shaft and an outer input shaft, respectively,
- two output shafts 13 and 14, and
- an intermediate shaft 16,
wherein the output shafts and the intermediate shaft are parallel but not coaxial to one another.

The inner input shaft 11 has an end portion 17 of enlarged diameter which projects from the outer input shaft 12 at the end remote from a clutch unit and from an engine (not shown), and has a cylindrical outer surface on which a bearing and one or more driving ring gears are mounted.

The assembly of the two input shafts 11 and 12 is supported by the housing 2 by means of a pair of radial taper-roller bearings 21 and 22 mounted in a so-called X-shaped arrangement. The inner ring of the bearing 21 is fitted on the enlarged-diameter end portion 17 of the inner input shaft 11, in abutment with a ring gear 34, and the outer ring is housed in a cylindrical seat formed in a vertical wall 7 of the half-shell 3. The inner ring of the bearing 22 is fitted on the hub of a gear 37 keyed to an intermediate portion of the outer input shaft 12 and the outer ring is housed in a cylindrical seat formed in a vertical wall 8 of the half-shell 4.

The inner input shaft 11 in turn is supported by the outer shaft 12 by means of a radial taper-roller bearing 23 and a needle roller bearing 24. The inner ring of the bearing 23 is fitted on the shaft 11, in abutment with a shoulder constituted by the side wall of the enlarged-diameter portion 17, and the outer ring is housed in a cylindrical seat formed in a ring gear 33 at the left-hand end (as seen in the drawing) of the shaft 12. The bearing 24 is superimposed on the bearing 22 (where the term "superimposed" should be understood as meaning "positioned substantially at the same axial or longitudinal level").

The inner input shaft 11 has a coaxial cavity in which an operating rod 9 for operating one of two friction clutches of the clutch unit, namely a first friction clutch associated to the inner input shaft 11, is slidably arranged. The rod 9 in turn is operated by a fluid-operated piston 10 slidably mounted in a cylindrical seat projecting from the wall 7 of the half-shell 3 and extending in a cylindrical cavity in the portion 17 of the shaft 11, in the region of the bearing 21.

The wall 8 which separates the gearbox 5 from the clutch unit has an opening through which the assembly of the two input shafts 11 and 12 extends towards that unit. Two oil-seal rings are fitted between the wall 8 and the outer input shaft 12 and between the two input shafts 11 and 12, respectively, to prevent lubricating oil passing from the gearbox compartment 5 to the clutch unit, if the clutches operate dry.

The inner input shaft 11 carries, on the enlarged-diameter portion 17, a plurality of driving ring gears relating to corresponding gear or transmission ratios. In the illustrated embodiment, these ring gears are associated with the even gear ratios (second, fourth and possibly sixth). In particular, a ring gear 32 associated with the second gear ratio is formed on the portion 17 of the input shaft 11 and the ring gear 34 associated with the fourth gear ratio is keyed to that portion, in abutment with the ring gear 32.

Similarly, the outer input shaft 12 carries a plurality of driving ring gears relating to corresponding gear or transmission ratios. In this embodiment, these ring gears are associated with the odd gear ratios and with the reverse gear ratio. In particular, with reference to Figure 1 it is possible to see, from left to right:
- the ring gear 33 associated with the third gear ratio,
- a ring gear 35 associated with the fifth gear ratio, keyed to the shaft 12 in abutment with a shoulder formed in a frustoconical portion 18 acting as a connection between the ring gear 33 and an intermediate, minimum-diameter portion 19 of that shaft,
- a ring gear 31 associated with the first gear ratio, formed on the portion 19, and
- the ring gear 37 associated with the reverse gear ratio, keyed to the shaft 12, in abutment with the ring gear 31.

The input shafts 11 and 12 can receive torque from an engine shaft (not shown) via the clutch unit.

The two output shafts 13 and 14 of the gearbox 5 are both supported by the two half-shells 3 and 4 of the housing 2, by pairs of radial taper-roller bearings 25, 26 and 27, 28, respectively, mounted in an X-shaped arrangement. The output shafts are parallel but not coaxial with one another and parallel but not coaxial with the two input shafts 11 and 12, of which they are situated on opposite sides.
Each of the output shafts 13 and 14 carries:
- a plurality of idle gears acting as driven gears associated with corresponding gear or transmission ratios,
- one or more axially slidable sleeves provided with synchronizing devices for the selection and engagement of the gear ratios,
- a final reduction pinion meshing (in a manner not shown in the drawing) with an input gear 54 of the set of gears of the differential 6.

In particular, with reference to Figure 1, it is possible to see, from left to right, on the output shaft 13:
- the bearing 25, the inner ring of which is fitted directly on the end portion of the shaft 13 and the outer ring of which is housed in a cylindrical seat in the wall 7 of the half-shell 3,
- an idle gear 44 associated with the fourth gear ratio,
- a sleeve 61 for the engagement of the fourth gear ratio or, when the transmission unit provides six gear ratios, for the selection and engagement of the fourth or of the sixth gear ratios,
- an idle gear 43 associated with the third gear ratio,
- a sleeve 62 for the selection and engagement of the third or of the first gear ratio,
- an idle gear 41 associated with the first gear ratio,
- a final reduction pinion 51, and
- the bearing 26, the inner ring of which is fitted on the hub of the pinion 51 in abutment with the teeth of the pinion and the outer ring of which is housed in a cylindrical seat in the wall 8 of the half-shell 4.

With regard to the output shaft 14, it is possible to see in Figure 1, from left to right:
- the bearing 27, the inner ring of which is fitted directly on the end portion of the shaft 14 and the outer ring of which is housed in a cylindrical set in the wall 7 of the half-shell 3,
- an idle gear 42 associated with the second gear ratio,
- a sleeve 63 for the selection and engagement of the second or of the fifth gear ratio,
- an idle gear 45 associated with the fifth gear ratio,
- a ring gear 47 associated with the reverse gear ratio and fixed for rotation with the shaft 14,
- a final reduction pinion 52 having the same number of teeth as the pinion 51 carried by the output shaft 13, and
- the bearing 28, the inner ring of which is fitted on the hub of the pinion 52 in abutment with the teeth of the pinion and the outer ring of which is housed in a cylindrical seat in the wall 8 of the half-shell 4.

The intermediate shaft 16 is supported by the housing 2 with its end portions fitted in respective cylindrical seats formed in the two half-shells 3 and 4 and is locked with respect to rotation by means of a screw (not shown). The shaft 16 carries two idle gears 37a and 37b which can be coupled for rotation with one another by means of a clutch device 65.

The various gear ratios of the gearbox 5 are obtained in the manner described below.

The first gear ratio is obtained by causing the driving ring gear 31 on the outer input shaft 12 to mesh with the idle gear 41 on the output shaft 13 as a result of an axial movement of the sleeve 62 to the right, which enables the idle gear 41 to be coupled for rotation with the shaft 13.

The second gear ratio is obtained by causing the driving ring gear 32 on the inner input shaft 11 to mesh with the idle gear 42 on the output shaft 14 as a result of an axial movement of the sleeve 63 to the left, which enables the idle gear 42 to be coupled for rotation with the shaft 14.

The third gear ratio is obtained by causing the driving ring gear 33 on the outer input shaft 12 to mesh with the idle gear 43 on the output shaft 13 as a result of an axial movement of the sleeve 62 to the left, which enables the idle gear 43 to be coupled for rotation with the shaft 13.

The fourth gear ratio is obtained by causing the driving ring gear 34 on the inner input shaft 11 to mesh with the idle gear 44 on the output shaft 13 as a result of an axial movement of the sleeve 61 to the left, which enables the idle gear 44 to be coupled for rotation with the shaft 13.

The fifth gear ratio is obtained by causing the driving ring gear 35 on the outer input shaft 12 to mesh with the idle gear 45 on the output shaft 14 as a result of an axial movement of the sleeve 63 to the right, which enables the idle gear 45 to be coupled for rotation with the shaft 14. Finally, the reverse gear ratio is obtained by causing the driving ring gear 37 on the outer input shaft 12 to mesh with the idle gear 37a on the intermediate shaft 16 and the idle gear 37b on the shaft 16 to mesh with the driven ring gear 47 on the output shaft 14, as a result of the operation of the clutch device 65, which enables the idle gears 37a and 37b to be coupled for rotation. This set of idle gears thus operates as an idler of a set of gears with three gears, enabling the direction of rotation of the output shaft 14 to be reversed.

By virtue of the fact that the sleeves 62 and 63 can engage non-consecutive gear ratios, it is possible to engage two consecutive gear ratios simultaneously, as is necessary when the gearbox 5 is used for a sequential transmission with a mechanism for pre-selection of the gears .

A further advantage also results from the particular arrangement of the sleeves, that is, from the fact that the sleeve 62 of the first and third gear ratios is superimposed on the ring gears or gears 35 and 45 of the set of gears of the fifth gear ratio, the sleeve 63 of the second and fifth gear ratios is superimposed on the ring gears or gears 33 and 43 of the set of gears of the third gear ratio and, finally, the sleeve 61 of the fourth gear ratio is superimposed on the ring gears or gears 32 and 42 of the set of gears of the second gear ratio. This configuration minimizes the axial dimension of the gearbox, which is thus substantially equal to the sum solely of the axial dimensions of the sets of gears associated with the forward gear ratios.

Naturally, the principle of the invention remaining unchanged, embodiments and details of construction may vary widely with respect to those described and illustrated purely by way of non-limiting example.

## Claims

1. A double-clutch transmission (1) for a motor-vehicle comprising:
a gearbox (5) having two coaxial input shafts (11, 12), namely an inner input shaft (11) and an outer input shaft (12), at least two output shafts (13, 14) parallel with the input shafts (11, 12), a plurality of driving ring gears or gears (31-35, 37) relating to the various gear or transmission ratios and carried by the input shafts (11, 12), a plurality of driven ring gears or gears (41-45, 47) relating to the various gear or transmission ratios and carried by the output shafts (13, 14), and selection means (61-65) for the selection of the desired gear ratio,
a clutch unit having first and second friction clutches each associated to a respective input shaft (11, 12), wherein the first friction clutch is associated to the inner input shaft (11), and
an operating rod (9) slidable in a coaxial cavity of the inner input shaft (11) for operating the first friction clutch,
**characterized in that** it further comprises a fluid-operated piston (10) slidably disposed in a cylindrical cavity in an end portion (17) of the inner input shaft (11) axially remote from the clutches for controlling the sliding movement of the operating rod (9).

2. A double-clutch transmission according to Claim 1, wherein the operating rod (9) is arranged to be pushed towards the clutch unit in order to operate the associated first friction clutch.

## Patentansprüche

1. Doppelkupplungsgetriebe (1) für ein Kraftfahrzeug, das umfasst:
ein Getriebe (5), das zwei koaxiale Eingangswellen (11, 12), d.h. eine innere Eingangswelle (11) und eine äußere Eingangswelle (12), wenigstens zwei Ausgangswellen (13, 14) parallel zu den Eingangswellen (11, 12), eine Vielzahl antreibender Hohlräder bzw. Zahnräder (31-35, 37) für die verschiedenen Gänge bzw. Übersetzungsverhältnisse, die von den Eingangswellen (11, 12) getragen werden, eine Vielzahl angetriebener Hohlräder bzw. Zahnräder (41-45, 47) für die verschiedenen Gänge bzw. Übersetzungsverhältnisse, die von den Ausgangswellen (13, 14) getragen werden, sowie Wähleinrichtungen (61-65) für die Auswahl des gewünschten Übersetzungsverhältnisses aufweist,
eine Kupplungs-Einheit, die eine erste und eine zweite Reibkupplung aufweist, die jeweils zu einer entsprechenden Eingangswelle (11, 12) gehören, wobei die erste Reibkupplung zu der inneren Eingangswelle (11) gehört, sowie
eine Betätigungsstange (9), die in einem koaxialen Hohlraum der inneren Eingangswelle (11) verschoben werden kann, um die erste Reibkupplung zu betätigen,
**dadurch gekennzeichnet, dass** es des Weiteren einen fluidgetriebenen Kolben (10) umfasst, der verschiebbar in einem zylindrischen Hohlraum in einem Endabschnitt (17) der inneren Eingangswelle (11) axial entfernt von den Kupplungen angeordnet ist, um die Verschiebebewegung der Betätigungsstange (9) zu steuern.

2. Doppelkupplungsgetriebe nach Anspruch 1, wobei die Betätigungsstange (9) so eingerichtet ist, dass sie auf die Kupplungs-Einheit zu gedrückt wird, um die zugehörige erste Reibkupplung zu betätigen.

## Revendications

1. Transmission à double embrayage (1) pour un véhicule à moteur comprenant :
une boîte de vitesses (5) ayant deux arbres d'entrée coaxiaux (11, 12), à savoir un arbre d'entrée intérieur (11) et un arbre d'entrée extérieur (12), au moins deux arbres de sortie (13, 14) parallèles aux arbres d'entrée (11, 12), une pluralité d'engrenages annulaires d'entraînement ou d'engrenages (31-35, 37) relatifs aux différents rapports d'engrenage ou de transmission et portés par les arbres d'entrée (11, 12), une pluralité d'engrenages annulaires d'entraînement ou d'engrenages (41-45, 47) relatifs aux différents rapports d'engrenage ou de transmission et portés par les arbres de sortie (13, 14), et des moyens de sélection (61-65) pour la sélection du rapport d'engrenage souhaité,
une unité d'embrayage ayant des premier et deuxième embrayages à friction associés chacun à un arbre d'entrée respectif (11, 12), dans laquelle le premier embrayage à friction est associé à l'arbre d'entrée intérieur (11), et
une tige d'actionnement (9) coulissante dans une cavité coaxiale de l'arbre d'entrée intérieur (11) pour l'actionnement du premier embrayage à friction,
**caractérisée en ce qu'**elle comprend en outre un piston actionné par un fluide (10) disposé de manière coulissante dans une cavité cylindrique dans une portion d'extrémité (17) de l'arbre d'entrée intérieur (11) axialement à distance des embrayages pour la commande du mouvement coulissant de la tige d'actionnement (9).

2. Transmission à double embrayage selon la revendication 1, dans laquelle la tige d'actionnement (9) est agencée pour être poussée vers l'unité d'embrayage afin d'actionner le premier embrayage à friction associé.
